Europäisches Patentamt

European Patent Office

Office européen des brevets

(11) Numéro de publication: **0 252 858**
**A1**

## (12) DEMANDE DE BREVET EUROPEEN

(21) Numéro de dépôt: 87420169.2

(22) Date de dépôt: 19.06.87

(51) Int. Cl.⁴: **C 08 L 83/04**
// C09D3/82, (C08L83/07, 83:05,
C08K5:54)

(30) Priorité: 24.06.86 FR 8609311

(43) Date de publication de la demande:
13.01.88 Bulletin 88/02

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Cavezzan, Jacques
Rés. du Parc Tête d'Or 4, Allée Marcel Achard
F-69100 Villeurbanne (FR)

Fau, Alain
18, Chemin du Grand Bois
F-69160 Tassin la Demi Lune (FR)

Soldat, André
90, rue Racine
F-69100 Villeurbanne (FR)

(74) Mandataire: Seugnet, Jean Louis et al
RHONE-POULENC INTERSERVICES Service Brevets
Chimie Centre de Recherches des Carrières B.P. 62
F-69192 Saint-Fons Cédex (FR)

(54) Compositions organopolysiloxanes polyaddition pour l'enduction de matériaux souples.

(57) Composition organopolysiloxane réticulable en couche mince par réaction d'hydrosilylation pour l'enduction de matériau souple comportant un organopolysiloxane vinylé, un organopolysiloxane hydrogéné, un catalyseur d'un métal du groupe du platine, caractérisée en ce qu'entre 0,5 et 60 % en nombre des groupes vinyle sont apportés par un vinylorganocyclotrisiloxane.

La composition de l'invention est plus particulièrement utilisable pour l'antiadhérence de support souple, en particulier des feuilles de papier.

EP 0 252 858 A1

**Description**

COMPOSITIONS ORGANOPOLYSILOXANES POLYADDITION POUR L'ENDUCTION DE MATERIAUX SOUPLES

La présente invention concerne des compositions organopolysiloxanes réticulables en couches minces par réaction d'hydrosilylation pour l'enduction de matériaux souples tels que des fibres textiles, du papier, du carton, des matières plastiques, des feuilles métalliques et similaires, notamment pour rendre ces matériaux anti-adhérents à l'égard de matières collantes.

Les compositions du type ci-dessus sont connues depuis longtemps dans l'industrie des silicones et sont décrites en particulier dans de nombreux brevets et demandes de brevets.

Ces compositions se divisent en trois grandes familles, les compositions sans solvant, les compositions en solution dans un solvant organique compatible avec les silicones, les compositions en émulsion aqueuse.

Ces trois familles de compositions comportent des systèmes analogues de réticulation à savoir :
- au moins un organopolysiloxane contenant par molécule au moins deux groupes vinyle liés chacun à un atome de silicium dénommés par la suite groupe SiVi,
- au moins un organohydrogénopolysiloxane contenant par molécule au moins trois atomes d'hydrogène liés chacun à un atome de silicium dénommés par la suite "groupe SiH",
- une quantité catalytiquement efficace d'un composé d'un métal du groupe du platine catalysant la réaction d'hydrosilylation.

Ces compositions avant emploi se présentent généralement en au moins deux emballages ou deux composants, le premier composant contenant en principe l'organopolysiloxane à groupe SiVi et le catalyseur d'hydrosilylation, le deuxième composant contenant l'organohydrogénopolysiloxane, les deux composants étant mélangés extemporanément lors de l'emploi.

Dans les compositions en émulsion aqueuse, ou en solution dans un solvant organique il est bien connu que l'eau ou le solvant organique joue, à température ambiante, un rôle d'inhibiteur du catalyseur au platine, qui disparaît lors de l'évaporation de l'eau ou du solvant au moment du traitement de réticulation. Cette action inhibitrice permet d'inhiber la formation d'un gel à température ambiante au moment de l'emploi lors du mélange des deux composantes, les utilisateurs ayant besoin, après mélange des deux composantes, de l'existence d'un "pot life" ou durée de vie de bain suffisant au moins égale à plusieurs heures, voir plusieurs jours.

Les compositions sans solvant comportent en outre nécessairement un quatrième constituant dénommé généralement inhibiteur du catalyseur d'hydrosilylation ajouté à l'une des deux composantes des compositions en une quantité efficace pour inhiber la formation immédiate d'un gel à température ambiante lors du mélange extemporané des deux composantes et de l'enduction des supports mais en une quantité insuffisante pour empêcher la réaction d'hydrosilylation lors du traitement de réticulation. Un tel inhibiteur peut être éventuellement utilisé dans les compositions en émulsion aqueuse ou en milieu solvant. Le traitement de réticulation implique nécessairement d'une part l'évaporation de l'eau ou du solvant organique pour les compositions en émulsion aqueuse ou en solution et d'autre part une réticulation rapide et complète de la composition sur son support par réaction d'hydrosilylation.

Ce traitement de réticulation implique donc un apport d'énergie qui, pour les compositions en émulsion et en solution nécessite un traitement thermique à 80-150 °C, combiné éventuellement à un traitement spécifique aux rayons ultra-violet, infra-rouges, rayonnement ionisant, effet corona, faisceau d'électrons, etc .....

Comme brevets illustrant les compositions en solution dans un solvant organique on peut citer en particulier les brevets américains US-A-3 328 482, US-A-3 527 659, US-A-3 814 731 et le brevet britannique GB-A-1 240 520.

Comme brevets illustrant les compositions en émulsion aqueuse on peut citer les brevets américains US-A-3 445 420, US-A-3 527 659 et US-A-3 900 617.

Comme brevets illustrant les compositions sans solvant on peut citer les brevets britanniques GB-A-1 041 082, GB-A-1 374 792 et les brevets américains US-A-4 043 977 et US-A-4 184 006.

Par ailleurs les organovinylcyclopolysiloxanes, et en particulier les méthylvinylcyclopolysiloxanes sont utilisés et connus depuis longtemps pour solubiliser les composés du platine dans les compositions organopolysiloxanes et ralentir l'activité du catalyseur à température ambiante lors de la réaction d'hydrosilylation. On peut en particulier citer le brevet français FR-A-1 313 846 et son addition 88 676 pour l'halogénure platineux, le brevet américain US-A-3 419 593 pour l'acide chloroplatinique, les brevets US-A-3 715 334, 3 775 452 et 3 814 730 pour un composé du platine contenant moins d'un atome-gramme d'halogène pour un atome-gramme de platine.

En outre dans le brevet français FR-A-2 232 575 et la demande européenne EP-A-146 422 on suggère la possibilité d'utiliser dans les compositions comme organovinylcyclopolysiloxanes essentiellement le tétramère vinylé tétraméthyl-1,3,5,7 tétravinyl-1,3,5,7 cyclotétrasiloxane.

Toutefois, à la connaissance de la demanderesse aucun document ne décrit ni ne suggère l'utilisation d'un trimère vinylorganocyclotrisiloxane et les avantages spécifiques découlant de cette utilisation.

Dans les compositions du type ci-dessus le problème de base le plus difficile à résoudre est d'aboutir à une composition qui, après mélange des deux composantes, aboutisse au meilleur compromis stabilité

0 252 858

(c'est-à-dire "pot life" ou durée de vie en bain) et réactivité (c'est-à-dire durée la plus courte de réticulation) pour aboutir à une réticulation effective et complète lors du traitement de réticulation.

Un des buts de la présente invention est précisément de proposer un accélérateur de réticulation qui, tout en n'affectant pas la durée de vie en bain, accélère l'activité catalytique du catalyseur d'hydrosilylation lors du traitement de réticulation même en présence d'un agent inhibiteur.

Dans ce qui suit, sauf mentions contraires, les pourcentages et parties sont en poids.

Ce but est atteint par la présente invention qui concerne en effet une composition organopolysiloxane réticulable en couche mince par réaction d'hydrosilylation pour l'enduction de matériau souple caractérisée en ce qu'elle comporte :

- A) au moins un organopolysiloxane comportant par molécule au moins deux groupes SiVi,

- B) au moins un organohydrogénopolysiloxane comportant par molécule au moins trois groupes SiH,

- C) une quantité catalytiquement efficace d'un catalyseur d'hydrosilylation qui est un composé d'un métal du groupe du platine, cette composition étant caractérisée en ce que entre 0,5 et 60%, de préférence entre 1,5 et 20 % en nombre des groupes SiVi de la composition sont apportés par un cyclotrisiloxane vinylé de formule :

$[R(CH_2 = CH)SiO]_3$ (1)

dans laquelle R est choisi parmi un radical alkyle en $C_1$-$C_4$, un radical phényle et un radical trifluoro-3,3,3 propyle, de préférence R est un radical méthyle.

La présente invention a permis de mettre en évidence de façon surprenante et inattendue que le composé de formule (1) joue le rôle d'accélérateur de réticulation, c'est-à-dire exhalte l'action catalytique du catalyseur (C) lors du traitement de réticulation sans pour autant affecter la durée de vie en bain de la composition. Ce rôle d'accélérateur existe lorsque la composition se présente sous la forme d'une émulsion aqueuse, d'une solution dans un solvant organique compatible avec les silicones et même d'une composition sans solvant comportant en outre nécessairement un quatrième constituant (D) qui est un inhibiteur du catalyseur (C) ajouté en une quantité efficace pour inhiber la formation d'un gel à température ambiante, cette quantité étant insuffisante pour empêcher la réaction d'hydrosilylation lors du traitement de réticulation.

Les organopolysiloxanes (A) de base sont des diorganopolysiloxanes de formule :

$R_2 R' SiO(SiR_2 O)_n (SiRR'O)_m SiR_2 R'$ (2)

dans laquelle n et m sont des nombres entiers pouvant être nuls séparemment et dont la somme a une valeur telle que l'organopolysiloxane a une viscosité à 25 °C d'au moins 20 mPa.s et d'au plus 30 000 000 mPa.s, les radicaux R identiques ou différents ont la signification donnée ci-dessus à la formule (1) et R' est R ou un radical vinyle étant entendu que si m = 0 R' est un radical vinyle.

Les organopolysiloxanes (A) peuvent comporter également de préférence les diorganocyclosiloxanes de formule :

$[R(CH_2 = CH)SiO]_p$ (3)

dans laquelle R a la même signification que ci-dessus et p est un nombre entier compris entre 4 et 10 inclus.

Les organopolysiloxanes (A) de formules (2) et (3) sont bien connus et sont décrits notamment dans les brevets américains US-A-3 220 972, US-A-3 344 111 et US-A-3 436 366, ces brevets décrivant également les organohydrogénopolysiloxanes (B).

De préférence au moins 60 % molaire des radicaux R sont des radicaux méthyle, et, de façon plus préférée tous les radicaux R sont des radicaux méthyle.

L'organohydrogénopolysiloxane (B) peut être linéaire cyclique ou ramifié.

L'organohydrogénopolysiloxane (B) sensiblement linéaire ou ramifié possède des motifs de formule générale moyenne :

$$R_x H_y Si O_{\frac{4 - x - y}{2}} \qquad (4)$$

dans laquelle les radicaux R identiques ou différents ont la signification indiquée plus haut, mais la possibilité pour certains radicaux R de représenter des radicaux vinyle n'étant pas exclue. De préférence au moins 80 % des radicaux R sont des radicaux méthyle.

Le symbole x représente un nombre quelconque allant de 1 à 1,99, le symbole y représente un nombre quelconque allant de 0,1 à 1, la somme x + y allant de 1,7 à 2,6. De préférence sont utilisés comme organohydrogénopolysiloxanes (B) des méthylhydrogénopolysiloxanes.

Les organohydrogénopolysiloxanes (B) sont disponibles sur le marché des silicones, de plus leurs techniques de préparation sont maintenant bien au point. L'une des techniques les plus utilisées consiste, dans un premier temps, à cohydrolyser des mélanges appropriés constitués de chlorosilanes choisi parmi ceux de formules : $R_3 SiCl$, $R_2 SiCl_2$, $RSiCl_3$, $SiCl_4$, $HR_2 SiCl$, $HRSiCl_2$, $HSiCl_3$. Par mélanges appropriés doivent être compris des mélanges qui renferment chacun, par atome de silicium, un nombre de radicaux R et un nombre d'atomes d'hydrogène coïncidant respectivement avec les valeurs représentées par les symboles x et y de la formule générale moyenne, la somme de ces nombres devant également coïncider avec les valeurs permises pour la somme x + y.

Dans un deuxième temps les cohydrolysats sont portés à une température allant de 80 à 220 °C de préférence en présence d'agents acides tels que l'acide sulfurique, les terres activées par un acide. Lors de ce chauffage il se produit un réarrangement des liaisons siloxaniques ainsi que la condensation des groupes SiOH. Ces transformations conduisent aux polymères organohydrogénopolysiloxaniques (B) qui possèdent ainsi, en fonction des mélanges de chlorosilanes de départ, des structures linéaires, cycliques ou ramifiées.

Parmi les polymères linéaires peuvent être cités, à titre illustratif, ceux répondant aux formules suivantes :

$(CH_3)_3 Si[OSiH(CH_3)]_g OSi(CH_3)_3$ ,

$H(CH_3)_2 Si[OSiH(CH_3)]_g OSi(CH_3)_2 H$

$(CH_3)_3 Si[OSiH(CH_3)]_g [OSi(CH_3)_2]_h OSi(CH_3)_3$

$H(CH_3)_2 Si[OSiH(CH_3)]_g [OSi(CH_3)_2]_h OSi(CH_3)_2 H$

$(CH_3)_2 C_2 H_5 [OSi(CH_3)H]_p OSi(CH_3)_3$

$(CH_3)_3 )Si[OSi(CH_3)H]_p [OSi(CH_3)C_2 H_5]_q OSi(CH_3)_3$

$(CH_3)_2 C_2 H_5 Si[OSi(CH_3)H]_p OSiC_2 H_5 (CH_3)_2$

$(CH_3)_2 (n.C_3 H_7)Si[OSi(CH_3)H]_p OSi(n.C_3 H_7)CH_3)_2$

$(CH_3)_3 Si[OSi(C_2 H_5)H]_{p'} [OSi(CH_3)_2]_{q'} OSi(CH_3)_3$

$(CH_3)_3 Si[OSi(CH_3)H]_p [OSi(CH_3)CH=CH_2]_q OSi(CH_3)_3$ .

$(CH_3)_2 CH_2 = CHSi[OSi(CH_3)H]_p OSiCH=CH_2 (CH_3)_2$

dans lesquelles le symbole g représente un nombre quelconque allant de 3 à 120, h un nombre quelconque allant de 1 à 50, p un nombre quelconque allant de 6 à 60, p′ un nombre quelconque allant de 1 à 15, q un nombre quelconque allant de 1 à 10, q′ un nombre quelconque allant de 7 à 40.

Ces polymères linéaires possèdent généralement une viscosité peu élevée, elle s'échelonne par exemple de 5 mPa.s à 500 mPa.s à 25 °C.

Parmi les polymères cycliques peuvent être cités à titre illustratif ceux répondant aux formules suivantes :

$[OSi(CH_3)H]_4$ , $[OSi(CH_3)H]_5$ , $[OSi(CH_3)H]_6$ , $[OSi(CH_3)H]_3$ ,

$[OSi(CH_3)H]_3 [OSi(CH=CH_2 |CH_3]$ , $[OSi(C_2 H_5)H]_3$

Quant aux polymères ramifiés ils sont constitués chacun d'une combinaison de motifs choisis parmi ceux de formules $R_3 SiO_{0,5}, R_2 SiO, RSiO_{1,5}, SiO_2$ , $HR_2 SiO_{0,5}, HRSiO, HSiO_{1,5}$, chaque combinaison qui définit un polymère renferme au moins un motif choisi parmi ceux de formules $RSiO_{1,5}, SiO_2$ , $HSiO_{1,5}$, les motifs étant cependant répartis d'une manière telle que la formule moyenne, ramenée à un silicium, de chaque polymère est englobée dans la formule générale moyenne précitée.

La viscosité de ces polymères s'étale de 2 mPa.s à 25 °C à 10 000 mPa.s à 25 °C.

A titre d'exemples concrets de polymères ramifiés de faible viscosité, peuvent être cités :

- ceux répondant aux formules ci-après :

$CH_3 Si[OSi(CH_3)_2 H]_3$ , $Si[OSi(CH_3)_2 H]_4$

$HSi[OSi(CH_3)_3][OSi(CH_3)_2 H]_2$ , $n.C_3 H_7 Si[OSi(CH_3)_2 H]_3$

$Si[OSi(CH_3)(C_2 H_5)H][OSi(CH_3)_2 H]_3$

- ceux constitués de motifs $SiO_2$ et $H(CH_3)_2 SiO_{0,5}$ de rapport $CH_3 /Si$ 1 à 1,5.

Généralement les constituants (A) et (B) se trouvent dans la composition en quantité telle que le rapport en nombre des groupes SiH sur les groupes SiVi soit compris entre 0,5 et 5, de préférence entre 0,6 et 2,5.

Dans les applications de revêtement et plus particulièrement dans les applications pour l'anti-adhérence du papier, on peut utiliser pour 100 parties en poids de polymère (A) de 0,1 à 50 parties en poids de polymère (B).

On peut utiliser comme catalyseur (C) des composés d'un métal du groupe du platine, en particulier leurs sels et complexes notamment les complexes de platine-oléfine comme décrits dans les brevets US-A-3 159 601 et US-A-3 159 662, les produits de réaction des dérivés du platine avec des alcools des aldéhydes et des éthers décrits dans le brevet US-A-3 220 972, les catalyseurs platine-vinylsiloxane décrits dans les brevets français FR-A-1 313 846 et son addition 88 676 et le brevet français FR-A-1 480 409, les complexes à ligand siloxane décrits dans les brevets US-A-3 715 334, US-A-3 775 452 et US-A-3 814 730 et les complexes à ligand organique décrits dans les brevets européens EP-A-57 459, EP-A-188 978 ET EP-A-190 530, ainsi qu'un catalyseur au rhodium tel que décrit dans les brevets US-A-3 296 291 et US-A-3 928 629.

Les métaux préférés du groupe du platine sont le platine et le rhodium ; le ruthénium bien que moins actif mais moins cher, est également utilisable.

On utilise généralement de 5 à 200 ppm de catalyseur calculés en poids de métal par rapport au poids des polysiloxanes à SiVi et à SiH.

Dans le cas où la composition est utilisée sans solvant, la viscosité des polymères (A) et (B) est choisie de telle sorte que la viscosité du mélange, c'est-à-dire de la composition, soit comprise entre 40 et 5 000 mPa.s, de préférence entre 100 et 3 000 mPa.s à 25 °C.

Dans ce cas la composition contient en plus un inhibiteur (D) qui peut être notamment des alkylthiourées (brevet US-A-3 188 299), des triallylisocyanurates (brevet US-A-3 882 083), des dialkylacétylènedicarboxylates (brevet US-A-4 347 346), des diallylmaléates (brevet US-A-4 256 870), des composés organiques acétyléniques (brevet US-A-3 445 420 et demande de brevet européen EP-A-146 422).

La quantité d'inhibiteur utilisée est généralement comprise entre 0,01 et 3,0 %, de préférence entre 0,05 et 2,0 % par rapport au poids total de la composition.

Les compositions selon l'invention peuvent être émulsionnées, dispersées ou diluées dans l'eau ou dans un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, des dérivés du monoéthylèneglycol et de méthylèneglycol.

De préférence, l'eau ou le solvant forment au moment de l'emploi de 50 à 99 % en poids de la dispersion ou de la solution.

Lors du traitement de réticulation impliquant l'évaporation de l'eau ou du solvant de la dispersion, la composition durcit et ces dispersions sont donc utiles comme compositions de revêtement pour des supports souples en métal, papier, matière plastique, carton, etc .....

Les compositions selon l'invention sont de préférence utilisées comme compositions pour rendre un matériau non adhérent, tel que des feuilles métalliques, du verre, des matières plastiques ou du papier, à d'autres matériaux auxquels il adhérerait normalement.

L'invention vise donc également un procédé permettant de rendre des feuilles de matériau souple non adhérentes à des surfaces auxquelles elles adhérent normalement, procédé caractérisé en ce qu'il consiste à appliquer une quantité de composition conforme à l'invention comprise généralement entre 0,1 et 10 g par m² de surface à enduire et à réticuler la composition par apport d'énergie comme indiqué plus haut dans l'introduction.

Les temps de gélification de ces compositions diluées ou non à température ambiante peuvent être supérieurs à 5 heures le plus souvent plusieurs jours et le catalyseur est réactivé à température plus élevée dépassant généralement 80 °C, et comprise entre 90 et 150 °C.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés : le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par réglage de la vitesse respective des deux cylindres qui tournent en sens inverse l'un de l'autre. La machine d'enduction décrite dans le brevet français 2 294 765 est également utilisable.

Les compositions diluées, c'est-à-dire avec solvant ou en émulsion aqueuse peuvent être appliquées à l'aide des dispositifs utilisés sur les machines industrielles d'enduction du papier telles que le cylindre gravé "Mille points", le système nommé "Reverse Roll". Une fois déposées sur les supports, les compositions sont durcies par apport d'énergie, dont au moins une partie peut être fournie par un rayonnement U.V., en quelques secondes par circulation sous une lumière U.V. et dans des fours-tunnels chauffés vers 60-200 °C ; le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute).

Les quantités de compositions déposées sur les supports sont variables et s'échelonnent le plus souvent entre 0,1 et 10 g/m² de surface traitée. Ces quantités dépendent de la nature des supports et des propriétés antiadhérentes recherchées. Elles sont le plus souvent comprises entre 0,5 et 1,5 g/m² pour des supports non poreux.

Les produits de formule (1) sont des produits bien connus dont les procédés de préparation sont en particulier décrits dans les brevets américains US-A-3 607 898, US-A-3 763 212, US-A-3 989 733 et la demande de brevet japonais publiée KOKAI 74/124 067, cités comme références.

Les produits de formule (1) conduisent à des revêtements plus durs bien que suffisamment souples ce qui facilite grandement la découpe automatique en machine des complexes souples, en particulier des papiers, sans altération de l'effet anti-adhérant.

Les compositions selon l'invention peuvent comporter en outre, de préférence dans les compositions sans solvant, les additifs utilisés usuellement en particulier de petites quantités par exemple de 0,1 à 5 parties en poids pour 100 parties en poids du constituant (A) d'une huile alpha, oméga-dihydroxydiméthylpolysiloxane de viscosité comprise entre 1 et 100 mPa.s à 25 °C et ayant une teneur pondérale de OH comprise entre 1 et 10 %.

Bien entendu les compositions en émulsions aqueuses conditionnées généralement en une partie (I) contenant (A) et (C) et une partie (II) contenant (B), comportent les agents émulsifiants ou de dispersion usuels qui peuvent être anionique, non anionique ou cationique.

Les matériaux polymères non ioniques tels que l'alcool polyvinylique (RHODOVIOL® 25/140 de RHONE-POULENC, ou l'ELVANOL® 50-42 de DUPONT) conviennent particulièrement pour la partie (I).

Par ailleurs les allyl-éthers et les allylphényl-éthers de polyalkylèneglycols (par exemple le CEMULSOL® O.N. 10-20 de RHONE-POULENC ou le TERGITOL® NP-40 de UNION CARBIDE) conviennent plus particulièrement pour la partie (II).

Dans ce qui suit toutes les viscosités sont mesurées à 25 °C.

- EXEMPLE 1 : mise en évidence de la plus grande réactivité du trimère vinylé.

La plus grande réactivité du trimère vinylé $D_3$ Vi par rapport tétramère $D_4$ Vi et au pentamère $D_5$ Vi répondant respectivement à la formule (1) ci-dessus avec R = méthyle et à la formule (3) ci-dessus avec R = méthyle et p = 4 ou 5, est mise en évidence par DSC ("Differential Scanning Calorimetry") définie par l'ICTA ("International Congress of Thermal Analysis").

Selon cette méthode on évalue l'enthalpie de la réaction d'hydrosilylation d'un échantillon en faisant subir à cet échantillon un traitement thermique particulier.

L'échantillon testé est une composition sans solvant analogue à une composition utilisable pour l'antiadhérence du papier comportant les constituants suivants :

- A) un copolymère statistique diméthylvinylméthylpolysiloxane à terminaisons diméthylvinylsiloxyle ayant 3 % en poids de groupe vinyle et une viscosité de 250 mPa.s.

- B) un copolymère méthylhydrogenopolysiloxane à terminaisons triméthylsiloxyle contenant 1,5 % en poids d'atomes d'hydrogène liés au silicium ayant une viscosité de 20 mPa.s.

- C) $D_3$ Vi, $D_4$ Vi ou $D_5$ Vi.

Toutes les compositions comportent en outre 30 parties par million de platine métal (1,5 $10^{-4}$ atg de Pt/kg de composition) sous la forme d'un complexe du platine préparé à partir de l'acide chloroplatinique et de divinyl-1,3 tétraméthyl-1,1,3,3 disiloxane comme décrit dans le brevet US-A-3 814 730.

Les compositions des quatre échantillons testés sont rassemblés dans le tableau I ci-après, les teneurs des constituants (A) à (D) sont indiquées en % pondéral.

On place successivement les quatre échantillons (10 mg chacun) dans une nacelle que l'on refroidit très rapidement à -50 °C sous azote et on chauffe progressivement l'échantillon suivant une montée uniforme de 10 °C par minute jusqu'à 250 °C en enregistrant la chaleur massique dégagée et à partir de la courbe obtenue on en déduit par intégration l'enthalpie de la réaction (en Kcal/mole SiH).

Les résultats expérimentaux sont rassemblés dans le tableau II ci-après où il apparaît que la température (T) de sommet de l'exotherme est la plus faible pour $D_3$ Vi ce qui montre que la réaction est plus exothermique pour le $D_3$ Vi. L'enthalpie de réaction est maximale pour $D_3$ Vi. Cela montre l'effet accélérateur du $D_3$ Vi sur le catalyseur au platine lors de la réaction d'hydrosilylation.

Si on atteignait tous les sites réactifs on aurait une enthalpie théorique de 25,8 Kcal/mole SiH.

TABLEAU I

| COMPOSANTS | | ECHANTILLON | | |
| --- | --- | --- | --- | --- |
| | | 1 | 2 | 3 |
| A | | 90,5 | 90,5 | 90,5 |
| B | | 7 | 7 | 7 |
| C | $D_3Vi$ | 2,5 | – | |
| | $D_4Vi$ | – | | 2,5 |
| | $D_5Vi$ | – | 2,5 | – |

TABLEAU II

| Echantillon | bornes d' intégration ° C | T (°C) | Enthalpie Kcal/mole SiH |
| --- | --- | --- | --- |
| 1 | 20–130 | 66 | 10,7 |
| 2 | 20–130 | 88 | 7,5 |
| 3 | 20–130 | 85 | 6,8 |

- <u>EXEMPLES COMPARATIFS 1 ET 2 ET EXEMPLES 3 A 6</u> :

- Emulsion aqueuse :

a) on mélange intimement les constituants ci-après :

- 100 parties d'un copolymère diméthylméthylhydrogénopolysiloxane bloqué à chaque extrémité de sa chaîne par un groupement triméthylsiloxyle et comportant à la fois des motifs diméthylsiloxyle et des motifs méthylhydrogénosiloxyle répartis de façon statistique et alternée sur la chaîne silicone, de viscosité 60mPa.s à 25 °C,

- 8 parties d'un mélange pondéral 70/30 de deux nonylphénols polyoxyéthylénés, l'un ayant 10 motifs $OCH_2 -CH_2$ et l'autre 20 motifs $OCH_2 -CH_2$ commercialisé par RHONE-POULENC sous la dénomination CEMULSOL® O.N 10-20,

- 15,4 parties d'eau,

- 0,5 partie d'une solution aqueuse à 40 % d'acide acétique.

Ce mélange est émulsifié par passage dans un broyeur à colloïdes. Le broyat est dilué par addition de 43 parties d'eau ; l'émulsion obtenue renferme au total 60 % du composé organopolysiloxanique hydrogéné.

b) on mélange intimement les constituants ci-après :

- 231 parties d'eau,

- 20 parties d'un alcool polyvinylique ayant un indice de saponification de 140 et présentant en solution à 4 % dans l'eau une viscosité de 25 mPa.2 à 25 °C, commercialisé par la Société RHONE-POULENC sous la dénomination RHODOVIOL® 25/140. Ensuite on ajoute à ce mélange :

- 1,5 partie du mélange pondéral 70/30 des deux nonylphénols polyoxyéthylénés utilisés sous a),

- 350 parties d'un copolymère statistique diméthylméthylvinylpolysiloxane ayant des motifs vinylés dans la chaîne et à terminaison vinyldiméthylsiloxyle ayant environ une viscosité de 500 mPa.s à 25 °C et environ 3 % de groupement vinyle,

- 4 parties d'un diméthylpolysiloxane bloqué à chaque extrémité de la chaîne par un groupement diméthylvinylsiloxyle de viscosité 5 mPa.s à 25 °C ayant environ 30 % en poids de radicaux vinyle,

- de 0 à 10 parties de tétraméthyltétravinyl cyclotétrasiloxane ($D_4$ Vi).

On ajoute à cette composition de 0 à 1 partie de triméthyltrivinylcyclotrisiloxane ($D_3$ Vi). L'ensemble est finement émulsifié par passage dans un broyeur à colloïdes. On dilue le broyat par addition de 292,5 parties d'eau et incorpore dans le broyat dilué, par simple agitation :

- 70 parties de l'émulsion préparée sous a),

- 20 parties de monopropylèneglycol.

La composition d'émulsion aqueuse ainsi formée est très stable au stockage ; en particulier, elle ne montre pas, après un abandon de 6 mois à 40 °C en récipient clos, de pertes significatives de groupes SiH.

On ajoute à cette émulsion 100 ppm de platine ($5.10^{-3}$ atome gramme de platine par Kg de composition) sous la forme d'un complexe du platine préparé à partir de l'acide chloroplatinique comme décrit ci-dessus.

On prépare un complexe platine-triène en mélangeant :

- 1 partie d'$H_2 PtCl_6$ , $6H_2 O$,

- 5 parties d'isopropanol,

- 2 parties de bicarbonate de sodium $NaHCO_3$ ,

- 6 parties de $\beta$-myrcène.

On dissout tout d'abord l'acide chloroplatinique dans l'isopropanol, puis on ajoute $NaHCHO_3$ par petites fractions pour éviter la formation de mousse car il se dégage du gaz carbonique, puis on ajoute le $\beta$-myrcène.

Le mélange est traité sous reflux pendant 20 minutes à environ 80 °C tout en agitant. La coloration orange du départ passe au jaune. On refroidit le mélange réactionnel à température ambiante et on élimine l'isopropanol à 20 °C sous un vide de 1,5 KPa. On précipite les impuretés inorganiques dans l'hexane et on concentre, après filtration, la solution à 40 °C sous un vide de 0,1 à 1 KPa. On obtient une huile rouge orangée avec un rendement de 80 % par rapport au poids total de platine et de réactifs initiaux. On obtient un rapport Cl/Pt = 1,0. La concentration du complexe est ramenée à 3 % par dilution dans le toluène. C'est cette solution qui est utilisée par la suite.

Ce complexe est utilisé sous forme d'émulsion aqueuse renfermant 2 % d'alcool polyvinylique comme cité sous b).

On agite vigoureusement à température ambiante le mélange pendant quelques minutes.

Cette émulsion catalysée est alors diluée par addition d'une quantité suffisante d'eau pour former un bain de traitement ayant 10 % d'extraits secs.

Ce bain est déposé à raison de 8 g/m² sur un papier Kraft pesant 50 g/m², satiné en surface.

Le dépôt est effectué à l'aide d'une barre égalisatrice de Mayer, montée sur une machine industrielle d'enduction du papier.

Le film d'émulsion recouvrant le papier est simultanément séché et durci par passage pendant X secondes dans un four-tunnel chauffé, la température au niveau du papier étant de 110 °C, pour déterminer le temps de réticulation.

On obtient ainsi un papier enduit possédant sur une face environ 0,8 g/m² d'un mince revêtement parfaitement réticulé.

On applique sur la face enduite du papier traité selon d), un ruban adhésif (sensible à la pression dénommé TESA R 4651) et maintient cette application pendant 20 heures sous une pression de 70 g/cm² ; la force nécessaire pour décoller ce ruban est ensuite mesurée à l'aide d'un dynamomètre, la vitesse de décollement étant de 30 cm/minute. On trouve une force de décollement de 10 g pour une largeur du ruban de 1 cm. Si on utilise une vitesse de décollement ultra rapide de 300 m/mm on trouve une force de décollement de 40 g pour une largeur de ruban de 1 cm.

En vue d'évaluer la stabilité du bain catalysé une nouvelle enduction est réalisée dans les mêmes conditions en utilisant le bain de traitement vieilli 24 heures. La stabilité du bain est estimée bonne si le temps de réticulation de l'enduction à 110 °C et si la performance d'antiadhérence obtenue sont identiques à ceux obtenus au temps 0 de la vie du bain (Pot-life).

Dans le tableau III ci-après l'action d'accélération de la réticulation due au triméthyltrivinylcyclotrisiloxane est mis en évidence sans qu'il n'y ait action néfaste sur la stabilité du bain (24 heures).

TABLEAU III

| Ex. | % en nombre de groupement Vi apporté par $D_3$ sur le total des groupements Vi | Concentration en $D_3Vi$ dans compositions 0/00 | Concentration en $D_4Vi$ dans compositions 0/00 | Temps de réticulation en secondes (110 °C) | Stabilité du bain à 25 °C (catalysé en heures) |
|---|---|---|---|---|---|
| 1 | 0 | 0 | 0 | 60 | 24 |
| 2 | 0 | 0 | 10 | 60 | 24 |
| 3 | 1,25 | 0,5 | 0 | 30 | 24 |
| 4 | 2 | 1 | 10 | 15 | 24 |
| 5 | 2,3 | 1 | 5 | 10 | 24 |
| 6 | 2,6 | 1 | 0 | 7,5 | 24 |

- EXEMPLE COMPARATIF 7 ET EXEMPLES 8 ET 9

- Composition sans solvant :

Un bain de traitement est préparé selon le mode opératoire suivant :

a) - 1 000 parties d'une composition de silicone renfermant : 894 parties d'un copolymère de polyméthylvinyldiméthylsiloxane ayant des motifs vinyle dans la chaîne et à terminaison diméthylvinylsiloxyle ayant environ 3 % en poids de groupements vinyle et présentant une viscosité d'environ 250 mPa.s à 25 °C,

b) - 25 parties de tétraméthyl-1,3,5,7 tétravinyl-1,3,5,7 cyclotétrasiloxane ($D_4$ Vi),

c) - 70 parties d'un fluide polyméthylhydrosiloxane à terminaison triméthylsilyle utilisé comme agent de réticulation comprenant environ 1,5 % en poids d'atomes d'hydrogène liés au silicium, ayant une viscosité d'environ 20 mPa.s à 25 °C,

d) - 10 parties d'une huile alpha-oméga-dihydroxydiméthylpolysiloxane de viscosité 50 mPa.s sec à 25 °C et un taux de groupements hydroxyles de 4 %,

e) - 1 partie de chloro-8 octyne-1 one-3 (inhibiteur du Pt) dont la synthèse est décrite dans le brevet européen EP-A-146 422.

On ajoute à ce bain :

- de 0 à 3 parties de triméthyl-1,3,5, trivinyl-1,3,5 cyclotrisiloxane ($D_3$ Vi),

- 60 ppm de platine ($3.10^{-4}$ at.g. de Pt/kg de composition) sous la forme d'un complexe du platine préparé à partir de l'acide chloroplatinique et de divinyl-1,3 tétraméthyl-1,1,3,3 disiloxane, comme décrit à l'exemple 1 du brevet US-A-3 814 730.

On agite vigoureusement à température ambiante le mélange pendant quelques minutes et on mesure le temps minimum de démarrage du processus de réticulation sur plaque chauffante à 100 °C (en secondes) selon la norme NF 30-506, la prise d'essai étant limitée à 0,2 g. Les résultats sont rassemblés dans le tableau IV.

## TABLEAU IV

| Ex. | $D_3Vi$ °/°° | % vinyl en nombre provenant de $D_3Vi$ | Temps de gel (s) |
|-----|------|------|------|
| 7 | 0 | 0 | 100 |
| 8 | 1 | 1,2 | 50 |
| 9 | 3 | 3,3 | 15 |

Du tableau IV il ressort clairement l'effet accélérateur de réticulation de $D_3$ Vi.

- EXEMPLES 10 A 14 ET EXEMPLE COMPARATIF 15 :

- Composition dans un solvant organique :

a) - 1 000 parties d'une composition de silicone renfermant :

* 300 parties d'une gomme polyvinylméthyldiméthylsiloxyle ayant des motifs vinyle dans la chaîne et à terminaison triméthylsiloxyle ayant environ 0,07 % en poids de groupements vinyle et présentant une viscosité d'environ $20.10^6$ mPa.s à 25 °C,

* 7 parties de tétraméthyl-1,3,5,7 tétravinyl-1,3,5,7 cyclotétrasiloxane ($D_4$ Vi),

* 8 parties d'un copolymère hydrogénométhyldiméthylpolysiloxane comportant des motifs méthylhydrogénosiloxyle et diméthylsiloxyle et à terminaison triméthylsiloxyle ayant environ 1 % en poids d'atomes

**0 252 858**

d'hydrogène liés au silicium et une viscosité d'environ 45 mPa.s à 25 °C,
* 685 parties de toluène.

On ajoute à ce bain :
- 0 à 1 partie de triméthyltrivinylcyclotrisoloxane ($D_3$ Vi),
- 60 ppm de platine ($3.10^{-4}$ at.g. de Pt/kg de composition) sous la forme d'un complexe du platine préparé à partir de l'acide chloroplatinique et de divinyl-1,3 tétraméthyl-1,1,3,3 disiloxane comme décrit à l'exemple 1 du brevet US-A-3 814 730.

On agite vigoureusement, à température ambiante, le mélange pendant quelques minutes et on dépose ensuite ce mélange (environ de 1 à 3g/m² sur du papier au moyen d'une barre d'enduction et on fait durcir la composition silicone dans un four à circulation d'air forcé réglé à 110 °C.

On étudie ainsi le durcissement du revêtement de silicone en notant (en seconde) le temps de séjour minimum dans le four (temps de réticulation) nécessaire pour obtenir un revêtement bien durci. On mesure par ailleurs l'augmentation de viscosité en fonction du temps du bain catalysé pour déterminer (en heures) la stabilité de bain (pot-life). On mesure en outre à 60 °C (en minutes) le temps de gel des compositions catalysées, selon la norme NF 51-429 de décembre 1983.

Les résultats obtenus sont rassemblés dans le tableau V ci-après d'où il ressort que $D_3$ Vi a un effet accélérateur de la réticulation sans affecter la stabilité de bain.

## TABLEAU V

| Ex. | % en nombre de Vinyle provenant de $D_3Vi$ | Temps de réticulation (secondes) | Stabilité de bain (heures) | Temps de gel à 60 °C (minutes) |
|-----|----|----|----|----|
| 10 | 13,4 | 8 | 48 | 25 |
| 11 | 9,8 | 10 | 48 | 30 |
| 12 | 5 | 12 | 48 | 50 |
| 13 | 1,2 | 40 | 48 | 80 |
| 14 | 0,7 | 50 | 48 | 100 |
| 15 | 0 | 60 | 48 | 120 |

## Revendications

1. - Composition organopolysiloxane réticulable en couche mince par réaction d'hydrosilylation pour l'enduction de matériau souple caractérisée en ce qu'elle comporte :
- A) au moins un organopolysiloxane comportant par molécule au moins deux groupes SiVi,
- B) au moins un organohydrogénopolysiloxane comportant par molécule au moins trois groupes SiH,

12

- C) une quantité catalytiquement efficace d'un catalyseur d'hydrosilylation que est un composé d'un métal du groupe du platine,

caractérisée en ce que entre 0,5 et 60%, de préférence entre 1,5 et 20 % en nombre des groupes SiVi de la composition sont apportés par un cyclotrisiloxane vinylé de formule :

$[R(CH_2 = CH)SiO]_3$  (1)

dans laquelle R est choisi parmi un radical alkyle en $C_1$ -$C_4$ , un radical phényle et un radical trifluoro-3,3,3 propyle, de préférence R est un radical méthyle.

2. - Composition selon la revendication 1, caractérisée en ce que, dans la formule (1) R est un radical méthyle.

3. - Composition selon les revendications 1 ou 2, caractérisée en ce qu'elle est sans solvant, en ce que la viscosité des constituants (A) et (B) est choisie de telle sorte que la viscosité de la composition soit comprise entre 40 et 5 000 mPa.s et en ce que la composition comporte en outre :

- D) un inhibiteur en quantité efficace pour inhiber la formation d'un gel à température ambiante mais en quantité insuffisante pour empêcher la réaction d'hydrosilylation lors du traitement de réticulation.

4. - Composition selon les revendications 1 ou 2, caractérisée en ce qu'elle est dispersée dans un solvant organique compatible avec les silicones.

5. - Composition selon les revendications 1 ou 2, caractérisée en ce qu'elle est sous la forme d'une émulsion aqueuse.

6. - Composition selon l'une quelconque des revendications précédentes, caractérisée en ce qu'elle comporte en outre de 0,1 à 5 parties en poids pour 100 parties en poids du constituant (A) d'une huile alpha, oméga-dihydroxydiméthylpolysiloxane de viscosité comprise entre 1 et 100 mPa.s à 25 °C et ayant une teneur pondérale en OH comprise entre 1 et 10 %.

7. - Procédé permettant de rendre des feuilles de matériau souple non adhérentes à des surfaces auxquelles elles adhéreraient normalement, caractérisé en ce qu'il consiste à appliquer une quantité comprise entre 0,1 et 10 g par m² de surface à revêtir, d'une composition telle que définie à l'une quelconque des revendications 1 à 6 puis à réticuler la composition.

8. - Matériaux souples enduits par une composition réticulée telle que définie à l'une quelconque des revendications 1 à 6.

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-4 472 563 (G. CHANDRA) * Revendications 1,25-29,34; colonne 3, lignes 14-19; colonne 4, ligne 13; colonne 6, lignes 26-45; colonne 9, lignes 52-66; colonne 10, lignes 6-7 * | 1-3,7 | C 08 L 83/07 // C 09 D 3/82 (C 08 L 83/07 C 08 L 83:05 C 08 K 5:54 ) |
| Y | US-A-3 957 717 (N. HARADA) * Revendications 1,3,14; colonne 2, lignes 38-46; colonne 3, lignes 1-13,35-38 * | 1-3 | |
| Y | FR-A-2 232 575 (SHINETSU) * Revendications 1,11,12; page 2, lignes 24-31; page 5, lignes 5-19 * | 1-3 | |
| A | US-A-3 876 605 (K. ITOH) * Revendication 1 * | 1 | DOMAINES TECHNIQUES RECHERCHES (Int. Cl.4) C 08 L C 09 D C 08 J |

Le présent rapport de recherche a été établi pour toutes les revendications

| Lieu de la recherche | Date d'achèvement de la recherche | Examinateur |
|---|---|---|
| LA HAYE | 26-10-1987 | DEPIJPER R.D.C. |